(19) Europäisches Patentamt
European Patent Office
Office européen des brevets

(11) **EP 4 524 804 A1**

(12) **EUROPEAN PATENT APPLICATION**

(43) Date of publication:
**19.03.2025 Bulletin 2025/12**

(21) Application number: **24200198.0**

(22) Date of filing: **13.09.2024**

(51) International Patent Classification (IPC):
**G06F 30/13** (2020.01)   **F03D 7/04** (2006.01)
**G05B 17/02** (2006.01)   **G06F 8/65** (2018.01)
**G06F 30/17** (2020.01)   **G06F 30/28** (2020.01)
**G06F 111/04** (2020.01)   **G06F 113/06** (2020.01)
**G06F 113/08** (2020.01)   **G06F 119/14** (2020.01)

(52) Cooperative Patent Classification (CPC):
**G06F 30/17; F03D 7/045; G05B 17/02; G06F 8/65; G06F 30/13; G06F 30/28;** G06F 2111/04; G06F 2113/06; G06F 2113/08; G06F 2119/14

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.09.2023   IN 202311062332**
**30.10.2023   DK PA202330296**

(71) Applicant: **VESTAS WIND SYSTEMS A/S**
**8200 Aarhus N (DK)**

(72) Inventors:
• **Thesbjerg, Leo**
  **6950 Ringkøbing (DK)**
• **Zinck, Kasper**
  **8762 Flemming (DK)**
• **Mani, Vimal Kumar**
  **638007 Erode Tamilnadu (IN)**
• **A, Fathima Fershana**
  **638001 Erode (IN)**

(74) Representative: **Vestas Patents Department**
**Hedeager 42**
**8200 Aarhus N (DK)**

(54) **VALIDATION OF UPDATE OF SOFTWARE OR STRUCTURAL MODEL OF A WIND TURBINE BASED ON LOAD ANALYSIS**

(57)     Disclosed is a method, performed by an electronic device, for validation of a second version of a software or a second structure model for control of a wind turbine. The method comprises obtaining first load data from simulating a load of the wind turbine using a first structural model and a first version of the software. The method comprises obtaining second load data from simulating the load of the wind turbine using the first structural model and the second version of the software or using the first version of the software and a second structural model. The second version of the software is an update of the first version of the software. The second structural model is an update of the first structural model. The method comprises determining, based on the first load data and the second load data, a statistical parameter.

Fig. 3

EP 4 524 804 A1

**Description**

The present disclosure pertains to the field of wind turbine control. The present disclosure relates to a method for validating a second version of a software for control of a wind turbine or a second structural update of a wind turbine and related electronic device.

BACKGROUND

A wind turbine has structural elements (such as physical elements, mechanical components, material used, hardware components, architectural elements, etc) and software elements (such as a software, such as a control software) used during operation. The structural elements and/or software elements of the wind turbine may affect the performance of the wind turbine.

However, during operation, the performance of the wind turbine may be affected by many factors including structural and/or software changes.

It is of benefit to provide ways of mitigating certain factors.

SUMMARY

For example, factors related to an update of structural elements and/or software elements can be mitigated prior to deployment of the update on a wind turbine.

It is an object of the present invention to mitigate load performance degradation caused by the update of a structural model and/or of a software before deploying the update on a wind turbine, e.g. by simulating load performance with and without the update.

Accordingly, it would be a benefit to provide an electronic device and a method for controlling operation of a wind turbine, which mitigate, alleviate, or address the shortcomings existing and mitigate the risk of a load performance degradation caused by the update of the structural model and/or software of a wind turbine. Variations in the load values are mainly due to stochastic nature of input. The present disclosure uses, inter alia, statistical methods to quantify this variation of loads.

Disclosed is a method, performed by an electronic device, for validation of a second version of a software or a second structure model for control of a wind turbine. The method comprises obtaining first load data from simulating a load of the wind turbine using a first structural model and a first version of the software. The method comprises obtaining second load data from simulating the load of the wind turbine using the first structural model and the second version of the software or using the first version of the software and a second structural model. In one or more examples, the second version of the software is an update of the first version of the software. In one or more examples, the second structural model is an update of the first structural model. The method comprises determining, based on the first load data and the second load data, a statistical parameter. In one or more examples, the statistical parameter is indicative of a statistical difference between the first load data and the second load data. The method comprises determining whether the statistical parameter meets a first criterion. The method comprises, upon determining that the statistical parameter meets the first criterion, validating the second version of the software or the second structural model for updating the control of the wind turbine.

Disclosed is an electronic device comprising a memory circuitry, a processor circuitry, and an interface, wherein the electronic device is configured to perform any of the methods according to the disclosed methods.

Disclosed is a wind turbine comprising a controller configured to control the wind turbine using a second version of a software validated or a second structural model validated according to any of the methods disclosed herein.

Disclosed is a computer readable storage medium storing one or more programs, the one or more programs comprising instructions, which when executed by an electronic device cause the electronic device to perform any of the methods according to the disclosed methods.

The disclosed method and electronic device allows eliminating, or reducing the risk, that the cause of a load variation is linked to an update of the structural model and/or software of a wind turbine. The disclosure assists in identifying the actual load variation by eliminating, or at least reducing significantly, uncertainties regarding the structural model and/or software affecting the load performance. The disclosure provides a way of ensuring that an updated control software or update wind turbine model can be used for operating a wind turbine within the allowable load envelope of the wind turbine. The disclosure further allows reducing the lead time and manual efforts in simulating and comparing loads between software versions or structural model versions before and after update. The disclosure does not require any additional cost and/or system for testing and validating a software version and/or a structural model version for update. The disclosure provides a way of operating a wind turbine with enhanced power output by improved operational control of an update and maintaining load within load envelope of wind turbine using an updated control software or updated wind turbine model. The disclosure facilitates certifying the structural integrity of the wind turbine with an updated control software or an updated wind turbine model, and certifying the wind turbine.

Stated differently, the disclosure enables validating a second version of a software for control of a wind turbine or a structural update (e.g. a minor structural update) of a wind turbine by demonstrating a retained satisfactory structural integrity.

BRIEF DESCRIPTION OF THE DRAWINGS

The above and other features and advantages of the present disclosure will become readily apparent to those skilled in the art by the following detailed description of exemplary embodiments thereof with reference to the attached drawings, in which:

Fig. 1 is a diagram illustrating schematically a system including one or more wind turbines according to this disclosure,
Figs. 2A-B show graphs illustrating load performance obtained from simulating a load of the wind turbine before and after an update,
Fig. 3 is a flow chart illustrating an example implementation, performed by an electronic device, for validation of a second version of a software or a second structural model for control of a wind turbine according to this disclosure,
Figs. 4A-4B are a flow-chart illustrating an exemplary method, performed by an electronic device, for validation of a second version of a software or a second structural model for control of a wind turbine according to this disclosure, and
Fig. 5 is a block diagram illustrating an exemplary electronic device according to this disclosure.

DETAILED DESCRIPTION

Various exemplary embodiments and details are described hereinafter, with reference to the figures when relevant. It should be noted that the figures are only intended to facilitate the description of the embodiments. They are not intended as an exhaustive description of the disclosure or as a limitation on the scope of the disclosure. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

The present disclosure provides a testing of wind turbine load variations based on statistical analysis between different software versions, prior to updating the software of a wind turbine to a new software version or between the different structural models of a wind turbine before changing to a new structural model. In this manner, it can be ensured that the new software version and/or structural model can be used to operate the wind turbine without exposing the wind turbine to unintentional and prohibitive loads when operating the turbine with the new software version and/or a structural model update.

A structural model of a wind turbine may be seen as a model characterizing one or more structural elements and/or components of the wind turbine, such as hardware components, structural geometry, material features, and/or other features. In general, the structural model may be a physics-based model of the wind turbine, such as an aeroelastic wind turbine model, such as a wind turbine model based on blade element momentum theory (BEM) which models the rotor aerodynamics, and a structural model of the turbine and a control system.

A software disclosed herein may be seen as a software configured to control a wind turbine, such as a control software, such as a computer program including instructions configured to cause an electronic device to perform control operations of the wind turbine, such as aerodynamic control of the turbine, such as control of pitch, thrust, blade angle, rotor speed, generator torque, power, etc.

Load can be seen as any impact (e.g. force, stress, and/or strain) on mechanical components of the wind turbine. In other words, load can be seen as mechanical stress on components of the wind turbine. Loads can include extreme loads and/or fatigue loads. Extreme loads are for example maximum loads sustainable by the wind turbine while maintaining structural integrity of the wind turbine. Fatigue loads are for example accumulative loads affecting the wind turbine over time, e.g. wearing, and/or repeated straining one or more components of the wind turbine.

The statistical techniques are used to quantify the load variations which are due to the stochastic nature of the environmental conditions around the wind turbine. Load simulation results are obtained for a required minimum number of simulations per load case for robustness of the load simulation results. The disclosed technique allows considering load data sets that may or may not be normally distributed. For each update, the updated version (e.g. of software or of structural model) is tested to obtain load values which are statistically compared with load values of the current software, or the current structural model deployed at the wind turbine.

The effect of the stochastic parameters on the load may be reduced by attempting to increase the robustness level of the update by configuring an increased number of wind seeds, different initialization times and azimuth angles in the simulation setup. However, this also increases the number of simulations in the load case setup. It is very time consuming to run many number of simulations for every update. In order to overcome this and handle the effect of stochastic parameters on load, the present disclosure proposes a validation of the update based on load simulation and various statistical techniques.

The disclosure allows identifying whether the load difference is caused by the update or not, for allowing an update that has been validated (because the update does not negatively affect the load performance).

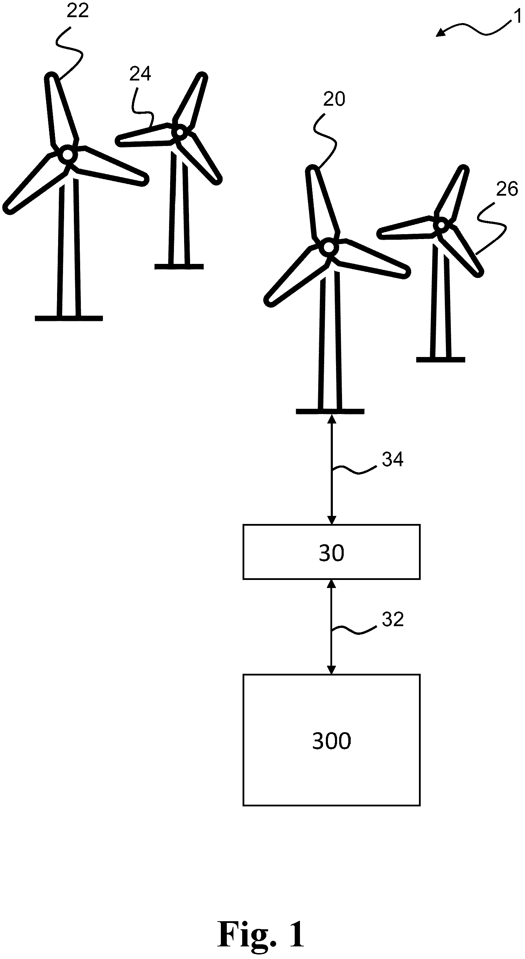

Fig. 1 is a diagram illustrating schematically a system 1 according to this disclosure. The system 1 comprises an electronic device 300, a controller 30, and/or wind turbines 20, 22, 24, and 26. In some example, the wind turbines 20, 22, 24 and/or 26 are a group of wind turbines arranged as a wind farm or a wind park. The wind turbines may be onshore wind turbine or offshore wind turbine, hereunder fixed-bottom and floating wind turbines.

The controller 30 is for example configured to control the operations of (e.g., to operate) one or more of wind turbines 20, 22, 24 and/or 26. In some examples, the controller 30 can be seen as a central control system.

The controller 30 may form part of one or more of the wind turbines 20, 22, 24 and/or 26. For example, the controller 30 can be part of a controller internal one or more wind turbines 20, 22, 24 and/or 26. The controller 30 may be external to one or more of the wind turbines 20, 22, 24 and/or 26. In one or more examples, the controller 30 may be a part of the electronic device 300.

The electronic device 300 is for example the electronic device configured to perform the method disclosed herein. The electronic device 300 may be configured to validate a second version of a software or a second structural model for control of a wind turbine. The electronic device 300 may provide (via link 32 and/or 34) to the one or more wind turbines (e.g. directly and/or via the controller 30) the validated second version of the software. In some examples, the one or more wind turbines 20, 22, 24 and/or 26 can then operate according to the validated second version of the software. In some examples, the controller 30 can control 34 the one or more wind turbines 20, 22, 24 and/or 26 according to the validated second version of the software.

In some examples, the controller 30 is configured to act as electronic device 300 for validation of an update.

The present disclosure provides a wind turbine (e.g. wind turbine 20, 22, 24, 26) comprising a controller configured to control the wind turbine using a second version of a software validated or a second structural model validated according to any of the methods disclosed herein.

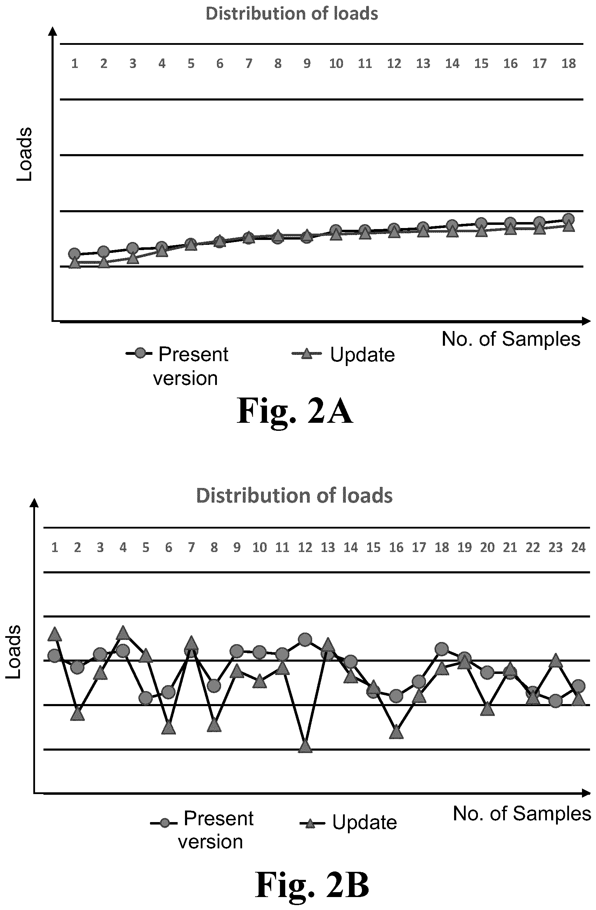

Figs. 2A-B show graphs illustrating load performance obtained from simulating a load of the wind turbine before and after an update. The graphs characterize load variations. Fig. 2A shows the distribution of load values vs number of samples for a present version of a software or structural model and for an updated version of software or structural model which are statistically equal. Fig. 2A shows an example of an update that would be validated by the present disclosure as the load values of the update are not statistically higher than the load values of the present version.

Fig. 2B shows the distribution of load values vs number of samples for a present version of a software or structural model and for an updated version of software or structural model which are statistically not equal. Fig. 2B shows an example of an update that would be validated by the present disclosure as the load values of the update are statistically higher than the load values of the present version.

There is a need for a validation technique based on statistical analysis of load according to this disclosure. This can be applied to extreme loads and to fatigue loads.

The present disclosure involves a statistical analysis used to validate the turbine load variations between different software versions or different structural models. The statistical approach can quantify the load variations of the wind turbine obtained via simulation.

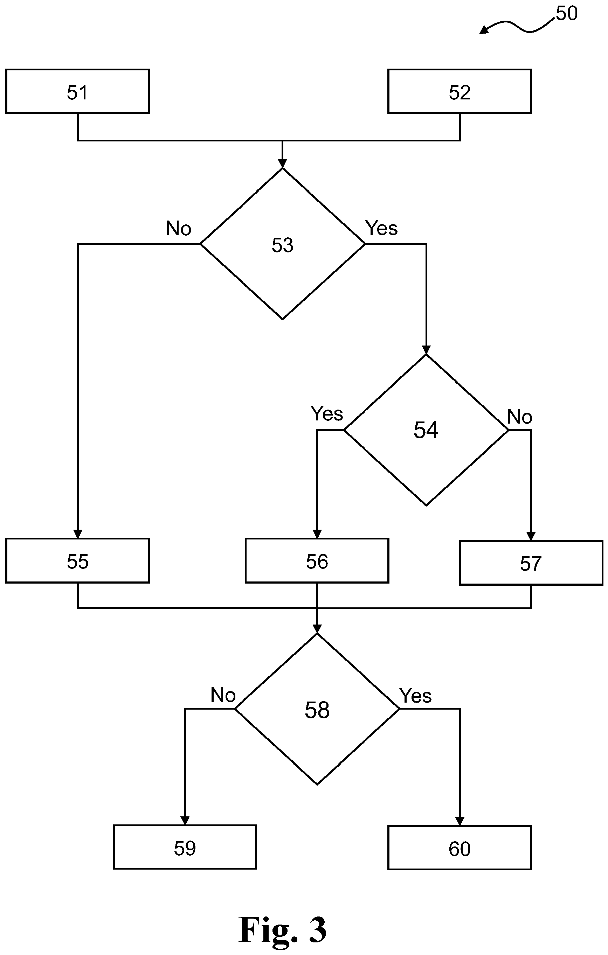

Fig. 3 is a flow chart illustrating an example implementation 50, performed by an electronic device, for validation of a second version of a software or a second structural model for control of a wind turbine according to this disclosure.

For example, first load data is obtained (e.g. generated and/or received) by the electronic device in step 51 from simulating a load of the wind turbine using a first structural model and a first version of the software. The first load data can be seen as a first data set including one or more data elements indicative of load. For example, second load data is obtained (e.g. generated and/or received) in step 52 from simulating the load of the wind turbine using the first structural model and the second version of the software or using the first version of the software and a second structural model. The second load data can be seen as a second data set including one or more data elements indicative of load. The second version of the software is an update of the first version of the software. In one or more examples, the second version of the software is a modification of the first version of the software, such as a change of the first version of the software. The second structural model is an update of the first structural model. The first version or the first structural model is for example a currently installed software or a currently used structural model respectively. The first version or the first structural model is for example a reference software or a reference structural model respectively. The second version or the second structural model is for example the updated (such as upgraded) software version or the updated (such as upgraded) structural model respectively. In one or more examples, the second structural model is a modification of the first structural model, such as a change of the first structural model.

In one or more examples, the second version of the software is different from the first version of the software. In one or more examples, the second structural model is different from the first structural model.

The implementation 50 allows a statistical comparison of the equality between the first load data and the second load data. In other words, a statistical parameter can be determined based on the first and second load data. The statistical parameter disclosed herein can be seen as a parameter characterizing a statistical comparison between the first load data and the second load data to determine statistical differences and/or statistical equality. In some examples, the statistical parameter is indicative of a statistical difference between the first load data and the second load data. In some examples, the statistical parameter is indicative of a statistical equality between the first load data and the second load data. Statistical equality between two data sets can show for example absence of a significant difference between the two sets. The statistical parameter can comprise a statistical difference and/or a statistical equality parameter. Examples of statistical parameter include one or more of: a median, a mean, a variance, and a standard deviation.

This allows highlighting a possible actual load increase which is due to the update. For example, when the statistical comparison of loads are equal, it is concluded that the load variation is not because of the update but due to the lack of robustness. For example, when statistical comparison shows an increase in load, then the update causes a load increase, and is not validated.

The statistical test or comparison to apply may depend on the probability distribution of the load data, e.g. normal distribution or not.

For example, in step 53, the electronic device determines whether the first load data and the second load data are normally distributed. In other words, for example, normality of the first load data and the second load data is verified.

In some examples, the electronic device determines in step 55 the statistical parameter using a non-parametric test on the first load data and the second load data upon determining that the first load data and the second load data are not normally distributed. The non-parametric test can be seen as a distribution free test. For example, in a non-parametric test, for randomly selected values X and Y from the first and second load data, the probability of X being greater than Y is equal to the probability of Y being greater than X. In some examples, the non-parametric test comprises one or more of: a Mann-Whitney U-test, a Mann-Whitney-Wilcoxon test, a Wilcoxon test, a Kruskal-Wallis test, and a Chi-squared test. Stated differently, when the load data is not normally distributed, the statistical parameter is determined by the electronic device using a non-parametric test, such as the Mann-Whitney U test.

Mann-Whitney U test may be expressed as e.g.:

$$z = \frac{U - m_U}{\sigma_U} \qquad (1)$$

$$m_U = \frac{(n_1 n_2)}{2} \qquad (2)$$

$$\sigma_U = \sqrt{\frac{n_1 n_2 (n_1 + n_2 + 1)}{12}} \qquad (3)$$

When there are ties in ranks, $\sigma$ should be corrected as follows:

$$\sigma_{corr} = \sqrt{\frac{n_1 n_2}{12}\left((n+1) - \frac{\sum_{i=1}^{k}(t_i^3 - t_i)}{n(n-1)}\right)} \qquad (4)$$

where U is given by $U_1 = R_1 - \frac{n_1(n_1+1)}{2}$ and $U_2 = R_2 - \frac{n_2(n_2+1)}{2}$ where:

$n_1$ denotes the sample size or degree of freedom for sample 1 (e.g. using current software or model);
$n_2$ denotes the sample size or degree of freedom for sample 2 (e.g. using an updated software or model);
$R_1$ & $R_2$ are the sums of the ranks in sample 1 & 2 respectively;
$m_U$ and $\sigma_U$ are the mean and standard deviation of U;

$$n = n_1 + n_2,$$

$t_i$ is the number of subjects sharing rank i, and
k is the number of distinct ranks.

In some examples, the statistical equality of the first load data and the second load data can be checked at step 58. In some examples, the statistical improvement of load performance of the second load data with respect to the first load data can be checked at step 58.

In some examples, the electronic device determines in step 58 whether the statistical parameter obtained from the non-parametric test applied on the second load data meets a criterion for the Mann-Whitney test. In step 59, the electronic device determines that the statistical parameter indicates the increase in load in the second load data compared to the first load data when the statistical parameter does not meet the criterion for the Mann-Whitney test. In step 60, the electronic device determines that the statistical parameter does not indicate an increase in load in the second load data compared to the first load data when the statistical parameter obtained from the non-parametric test meets the criterion for the Mann-Whitney test. The criterion for the Mann-Whitney test may be based on a threshold. For example, the criterion for the Mann-Whitney test is met when the Z-value is lesser or greater than the Z critical limits based on the sample size to be statistically equal.

A criterion (e.g. a second criterion) can be met when the statistical parameter of the second load data is less or greater than an upper bound of a tolerance margin based on the sample size.

The T value can be seen as the test statistic that measures the difference between the means of the first load data and the second load data relative to the variability within the first load data and the second load data. For example, a larger t-value indicates a larger difference between the means of the first load data and the second load data. Degrees of freedom can be seen as degrees of freedom representing the number of independent observations in the first load data and the second load data. A confidence interval can be seen as a range of values that is likely to contain the true difference between the means of the first load data and the second load data with a certain level of confidence (usually 95%). For example, if the confidence interval does not include zero, it indicates that the difference between the means of the first load data and the second load data is statistically significant.

In some examples, upon determining that the first load data and the second load data are normally distributed, the electronic device determines a first variance associated with the first load data and a second variance associated with the second data and determines in step 54 using an F-test whether the first variance and the second variance are equal. For example, when the load data is normally distributed, the electronic device determines the statistical parameter using the F-test where the first and second variances are checked to identify the suitable statistical test method.

In some examples, upon determining that the first variance and the second variance are equal, the electronic device determines in step 56 the statistical parameter using a student-t-test on the first load data and the second load data. In other words, when the first and second variances are equal, the statistical analysis is done by using student-t-test.

Student t-test may include a calculation of t-statistic as follows e.g.:

$$t_{dof} = \frac{(\overline{X_1} - \overline{X_2}) - (\overline{\mu_1} - \overline{\mu_2})}{S_{\overline{X1-X2}}} \qquad (5)$$

Where:

$$\overline{X}_k = \frac{\sum_{i=1}^{N_k} X_{ki}}{N_k} \qquad (6)$$

$$S_{\overline{X1-X2}} = \sqrt{\frac{(N_1-1)S_1^2 + (N_2-1)S_2^2}{N_1+N_2-2} \left(\frac{1}{N_1} + \frac{1}{N_2}\right)} \qquad (7)$$

$$DOF = N_1 + N_2 - 2 \qquad (8)$$

where $\overline{X1}$ denotes the sample mean value from the first load data,
$\overline{X2}$ denotes the sample mean value from the second load data,
$\overline{\mu_1}$ denotes the population mean value from the first load data,
$\overline{\mu_2}$ denotes the population mean value from the second load data,
$S_1$ denotes the standard deviation of the first load data,
$S_2$ denotes the standard deviation of the second load data,
$N_1$ denotes the number of sample in the first load data,
$N_2$ denotes the number of sample in the second load data,
$S_{\overline{X1-X2}}=$ denotes the difference in standard deviation between sample from the first and the second load data,
DOF denotes degrees of freedom, and
$t_{dof}$ denotes the calculation of t- static value for that particular degree of freedom.

In some examples, the electronic device determines in step 58 whether the statistical parameter obtained from the student-t-test applied on the second load data meets a third criterion. In step 59, the electronic device determines that the statistical parameter indicates the increase in load in the second load data compared to the first load data when the statistical parameter does not meet the third criterion. In step 60, the electronic device determines that the statistical parameter does not indicate an increase in load in the second load data compared to the first load data when the statistical parameter obtained from the student-t-test applied on the second load data meets the third criterion. For example, the third criterion is met when the statistical parameter obtained from the student-t-test applied on the second load data is less than an upper bound, such as the T-critical limit and/or within a range of tolerance limit, e.g. based on the degree of freedom and confidence interval. The third criterion may be based on a third threshold (e.g. a tolerance margin).

In some examples, upon determining that the first variance and the second variance are not equal, the electronic device determines in step 57 the statistical parameter using a Welch-t-test on the first load data and the second load data. When the first and second variances are not equal, the statistical analysis applied is the Welch-t-test.

The Welch t-test may be expressed as e.g.:

$$t_{dof} = \frac{(\overline{X_1} - \overline{X_2}) - (\overline{\mu_1} - \overline{\mu_2})}{*S_{\overline{X1} - \overline{X2}}} \qquad (9)$$

where:

$$* S_{\overline{X1} - \overline{X2}} = \sqrt{\left(\frac{S_1^2}{N_1}\right) + \left(\frac{S_2^2}{N_2}\right)} \qquad (10)$$

$$DOF = \frac{\left(\frac{S_1^2}{N_1} + \frac{S_2^2}{N_2}\right)^2}{\left(\frac{S_1^4}{N_1^2} \quad (N_1-1)\right) + \left(\frac{S_2^4}{N_2^2(N_2-1)}\right)} \qquad (11)$$

where:

$\overline{X1}$ denotes the sample mean value from the first load data,
$\overline{X2}$ denotes the sample mean value from the second load data,
$\overline{\mu_1}$ denotes Population mean value from the first load data,
$\overline{\mu_2}$ denotes Population mean value from the second load data,
$S_1$ denotes the standard deviation of the first load data,
$S_2$ denotes the standard deviation of the second load data,
$N_1$ denotes the number of sample in the first load data,
$N_2$ denotes the number of sample in the second load data,
$* S_{\overline{X1} \cdot \overline{X2}}$ denotes the combined standard deviation between sample from the first and the second load data, and
DOF denotes degrees of freedom, and
$t_{dof}$ denotes the calculation of t- static value for that particular degree of freedom.

In some examples, the electronic device determines in step 58 whether the statistical parameter obtained from the Welch-t-test applied on the second load data meets a fourth criterion. In step 59, the electronic device determines that the statistical parameter indicates an increase in the load when the statistical parameter does not meet the fourth criterion.

In step 60, the electronic device determines that the statistical parameter does not indicate an increase in the load in the second load data with respect to the first load data when the statistical parameter obtained from the Welch-t-test applied on the second load data meets the fourth criterion. The fourth criterion can be based on a fourth threshold. The fourth criterion can be met when the statistical parameter of the second load data is within a tolerance margin from the statistical parameter of the first load data obtained from Welch-t-test. In some examples, the fourth criterion is met when the statistical parameter of the second load data is lower than an upper bound of the tolerance margin.

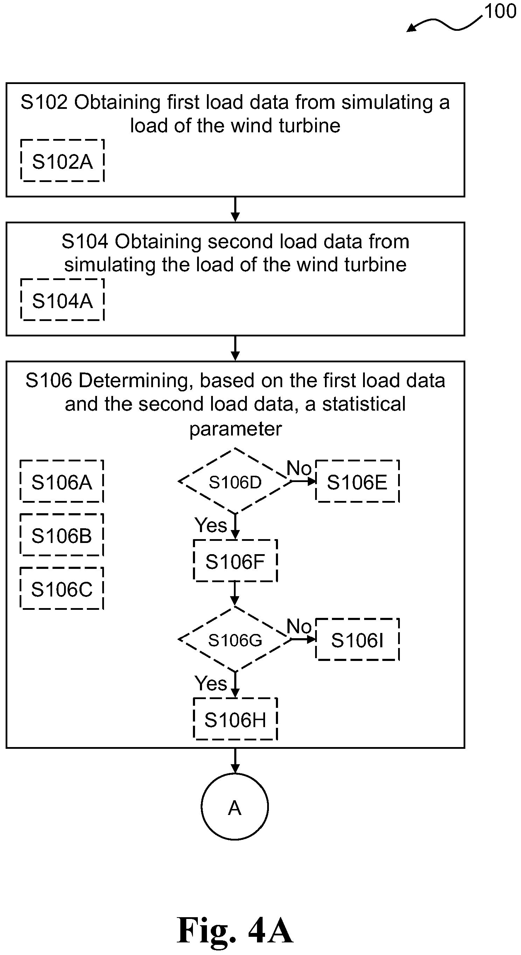

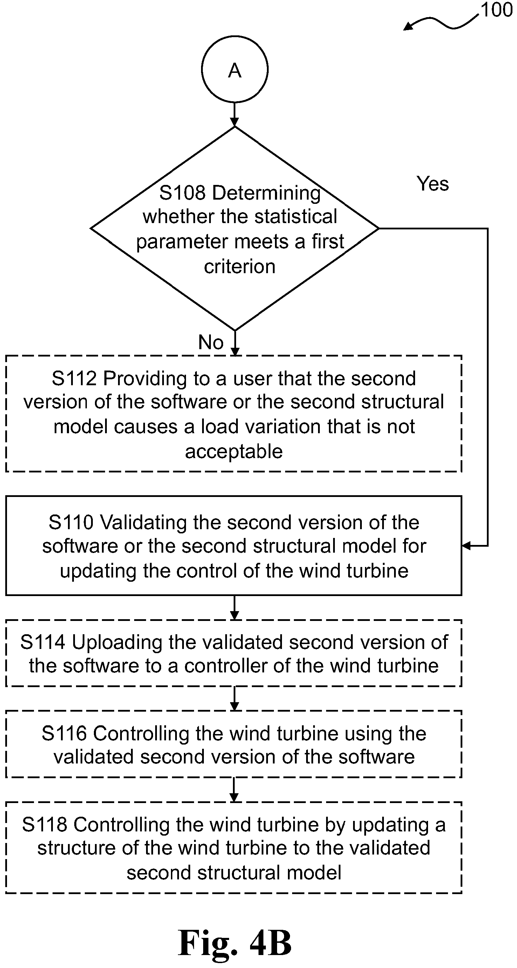

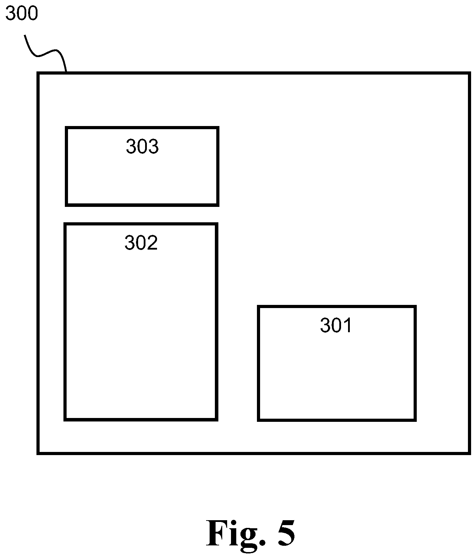

Figs. 4A-4B show a flow diagram of an example method 100, performed by an electronic device, e.g. for validating a second version of a software or a second structural model for control of a wind turbine according to the disclosure. For example, the method 100 may be seen as a method for validating a second version of a software for control of a wind turbine or a structural update of a wind turbine. The electronic device is the electronic device disclosed herein, such as electronic device 300 of Fig. 5

The method 100 comprises obtaining S102 first load data from simulating a load of the wind turbine using a first structural model and a first version of the software. For In one or more examples, obtaining S102 the first load data comprises receiving, retrieving and/or generating (e.g. simulating) the first load data. For example, the simulation of the load of the wind turbine comprises a simulation of the first version of the software (e.g. a control software, and/or a firmware) of the wind turbine. For example, the simulation of the load of the wind turbine comprises a simulation of the first structural model (e.g. the physical structure and/or components (such as mechanical and/or electronic components)) of the wind turbine.

The method 100 comprises obtaining S104 second load data from simulating the load of the wind turbine using the first structural model and the second version of the software or using the first version of the software and a second structural model. The second version of the software is an update of the first version of the software. The second structural model is an update of the first structural model. In one or more examples, obtaining S104 the second load data comprises receiving, retrieving and/or generating the second load data (e.g. simulating the load of the wind turbine using the update).

In one or more example methods, obtaining the first load S102 data and the second load data S104 comprises obtaining the first load data S102A and the second load data S104A from simulating the load for a pre-determined number of simulations. In some examples, obtaining the first load S102 data and the second load data S104 comprises obtaining the first load data S102A and the second load data S104A from simulating the load for a pre-determined number of simulations for one or more (e.g., each) load case (such as to improve robustness of the statistical comparison).

The method 100 comprises determining S106, based on the first load data and the second load data, a statistical parameter indicative of a statistical difference between the first load data and the second load data. For example, the statistical parameter is a statistical difference parameter and/or a statistical equality parameter. In some examples, determining, based on the first load data and the second load data, the statistical parameter comprises carrying out an equality hypothesis test for determining whether two or more means and/or medians from the first load data and the second load data are significantly different (e.g. based on a criterion, e.g. a threshold). In some examples, determining, based on the first load data and the second load data, the statistical parameter comprises carrying out a null hypothesis test for determining whether two or more means from the first load data and the second load data have no significant difference (e.g. based on a criterion, e.g. a threshold).

The method 100 comprises determining S108 whether the statistical parameter meets a first criterion. The method 100 comprises, upon determining S108 that the statistical parameter meets the first criterion, validating S110 the second version of the software or the second structural model for updating the control of the wind turbine. In one or more example methods, the method 100 comprises upon determining that the statistical parameter does not meet the first criterion, providing S112 to a user that the second version of the software or the second structural model causes a load variation that is not acceptable. The electronic device may notify or send to the user who made the change information regarding the failure of the validation. This can mitigate the load increase due to the update and avoid rolling out the update until the load variation is remedied by another update.

Stated differently, the method 100 enables validating a second version of a software for control of a wind turbine or a structural update (e.g. a minor structural update) of a wind turbine by demonstrating a retained satisfactory structural integrity and/or a load performance that is not affected negatively.

In one or more example methods, the statistical parameter meets the first criterion when the statistical parameter does not indicate an increase in the load in the second load data compared to the first load data. In one or more example methods, the statistical parameter does not meet the first criterion when the statistical parameter indicates an increase in the load in the second load data compared to the first load data. In other words, for example, the first criterion is met by the statistical parameter when the statistical parameter indicates a statistical decrease or equal performance in the load of the second load data compared to the first load data.

The first criterion may be based on a first threshold, such as a range, and/or a value with a tolerance margin. For example, the statistical parameter provides a statistical difference which is compared to the first threshold to identify whether the statistical parameter meets the first criterion. In other words, for example, the first criterion allows checking if the statistical difference is not significant so the update can be validated.

In one or more example methods, determining S106 the statistical parameter comprises determining S106A a first statistical value based on the first load data. For example, the first statistical value may be a median, a mean, and/or a variance.

In one or more example methods, determining S106 the statistical parameter comprises determining S106B a second statistical value based on the second load data. For example, the second statistical value may be a median, a mean, and/or a variance.

In one or more example methods, determining S106 the statistical parameter comprises determining S106C the statistical parameter based on a comparison of the first statistical value and the second statistical value.

The first statistical value can for example be seen as a current and/or base software mean value or model mean value. The second statistical value can for example be seen an updated software or model mean value. In some examples, the comparison of the first statistical value and the second statistical value can be seen as a comparison between the current and/or base software mean value and the updated software mean value or model mean value.

In some examples, the comparison of the first statistical value and the second statistical value can be seen as a statistical verification of the statistical equality of the loads (e.g., the equality of the first load data and the second load data) or of a statistical decrease of the load from the first load data to the second load data. In other words, determining S106 a statistical parameter indicative of a statistical difference between the first load data and the second load data may comprise statistically comparing the equality of two mean values (e.g., the first statistical value and the second statistical value). In some examples, the comparison showing statistical equality or a decrease in load is satisfactory for validation.

The statistical parameter does not indicate an increase in the load in the second load data compared to the first load data when the statistical parameter meets a second criterion.

In one or more examples, the second criterion can be met when the second statistical value is within a tolerance margin from the first statistical value, e.g. based on the sample size. For example, when the second statistical and the first statistical values are tested using the student-t-test, the second statistical and the first statistical values resulting from the student-t-test should be less than the T-critical limit and/or an upper limit of a range (e.g. tolerance limit) based on the DOF and confidence interval), e.g. based on the sample size.

The statistical parameter indicates the increase in the load when the statistical parameter does not meet the second criterion. In other words, when the updated software mean value for load is higher than the base software mean value for load, the actual load (e.g., of the simulated wind turbine) can be seen as an increase in load. For example, when the comparison shows a load difference parameter out of range, such as above a limit of the tolerance margin for the given degree of freedom and significance level or for the given conditions, and for the sample size, then it indicates an increase in the load.

In one or more example methods, determining S106 the statistical parameter comprises determining S106D whether the first load data and the second load data are normally distributed. In one or more example methods, determining S106 the statistical parameter comprises, upon determining that the first load data and the second load data are not normally distributed, determining S106E the statistical parameter using a non-parametric test on the first load data and the second load data. This is illustrated in the example of Fig. 3.

In one or more example methods, the non-parametric test comprises one or more of: a Mann-Whitney U-test, a Mann-Whitney-Wilcoxon test, a Wilcoxon test, a Kruskal-Wallis test, and a Chi-squared test.

In one or more example methods, determining S106 the statistical parameter comprises, upon determining that the first load data and the second load data are normally distributed, determining S106F a first variance associated with the first load data and a second variance associated with the second data. In one or more example methods, determining S106 the statistical parameter comprises, upon determining that the first load data and the second load data are normally distributed, determining S106G using an F-test whether the first variance and the second variance are equal. This is for example illustrated in Fig. 3.

In one or more example methods, determining S106 the statistical parameter comprises, upon determining that the first variance and the second variance are equal, determining S106H the statistical parameter using a student-t-test on the first load data and the second load data. In some examples, determining S106H comprises determining the statistical parameter by applying the student t-test to the first load data and the second load data.

The statistical parameter does not indicate an increase in load in the second load data compared to the first load data when the statistical parameter obtained from the student-t-test applied on the second load data meets a third criterion. For example, the statistical parameter is obtained based on the first and second mean value by applying the student t-test and that the statistical parameter meets the third criterion when the statistical parameter is within or lower than the tolerance margin.

The statistical parameter indicates the increase in load in the second load data compared to the first load data when the statistical parameter does not meet the third criterion.

The third criterion can be based on a third threshold. In some examples, whether the statistical parameter meets the third criterion depends on a comparison of the statistical parameter with the third threshold. For example, when the statistical parameter (e.g. statistical difference) is greater than to the third threshold, the third criterion can be seen as not being met by the statistical parameter. For example, when the statistical parameter is equal or less than the third threshold, the third criterion can be seen as being met by the statistical parameter. The third threshold for example comprises a value. For example, the third criterion is met when the second statistical value is for example lower than an upper bound of the tolerance margin. The threshold may for example be pre-set (e.g., by a user). The threshold may for example be updated, such as adjusted, e.g., by a user.

In some examples, the third criterion is met when the second statistical value from student-t-test is within a tolerance margin from or lower than a first_statistical value obtained from the student-t-test applied on the first load data. (e.g., within critical value (t-critical) (tolerance limit) of a given significance level ($\alpha$) from one tail t-distribution, e.g. based on the sample size), then the second mean value and the first mean value are statistically equal. For example, the t-tables contains t-critical values for the given DOF and $\alpha$ level.

In one or more example methods, determining S106 the statistical parameter comprises, upon determining that the first variance and the second variance are not equal, determining S106I the statistical parameter using a Welch-t-test on the first load data and the second load data. The statistical parameter does not indicate an increase in the load in the second load data with respect to the first load data when the statistical parameter obtained from the Welch-t-test applied on the second load data meets a fourth criterion. This is for example illustrated in Fig. 3.

The statistical parameter indicates an increase in the load when the statistical parameter does not meet the fourth criterion. The fourth criterion can be based on a fourth threshold. In some examples, whether the statistical parameter meets the fourth criterion depends on a comparison of the statistical parameter with the fourth threshold. For example, when the statistical parameter is greater than or equal to the fourth threshold, the fourth criterion can be seen as not being met by the statistical parameter. For example, when the statistical parameter is less than the fourth threshold, the fourth criterion can be seen as being met by the statistical parameter. The fourth threshold for example comprises a value. In some examples, the fourth criterion is met when a second statistical value e.g., obtained from the welch-t test is within a tolerance margin of the first statistical value (e.g., obtained from the welch-t-test). In some examples, the fourth criterion is met when second value is for example lower than an upper bound of the tolerance margin. The threshold may for example be pre-set (e.g., by a user). The threshold may for example be updated, such as adjusted, e.g., by a user.

In one or more example methods, the method 100 comprises uploading S114 the validated second version of the software to a controller of the wind turbine. In one or more example methods, the method 100 comprises controlling S116 the wind turbine using the validated second version of the software.

In one or more example methods, the method 100 comprises controlling S118 the wind turbine by updating a structure of the wind turbine to the validated second structural model.

Fig. 5 is a block diagram of an exemplary electronic device 300 according to the disclosure. The electronic device 300 comprises memory circuitry 301, processor circuitry 302, and an interface 303. The electronic device 300 is configured to perform any of the methods disclosed in Fig. 4A-B. In other words, the electronic device 300 is configured for validation of a second version of a software or a second structure model for control of a wind turbine. The electronic device may be seen as a validation device. The electronic device may be seen as a wind turbine control device, e.g. a controller of a wind turbine.

The electronic device 300 is configured to obtain (e.g., via processor circuitry 302 and/or interface 303) first load data from simulating a load of the wind turbine using a first structural model and a first version of the software.

The electronic device 300 is configured to obtain (e.g., via processor circuitry 302 and/or interface 303) second load data from simulating the load of the wind turbine using the first structural model and the second version of the software or using the first version of the software and a second structural model. The second version of the software is an update of the first version of the software. The second structural model is an update of the first structural model.

The electronic device 300 is configured to determine (e.g., via processor circuitry 302), based on the first load data and the second load data, a statistical parameter indicative of a statistical difference between the first load data and the second load data.

The electronic device 300 is configured to determine (e.g., via the processor circuitry 302) whether the statistical parameter meets a first criterion.

The electronic device 300 is configured to, upon determining that the statistical parameter meets the first criterion, validate (e.g., via the memory circuitry 301, processor circuitry 302 and/or interface 303) the second version of the software or the second structural model for updating the control of the wind turbine.

The processor circuitry 302 is optionally configured to perform any of the operations disclosed in Fig. 4A-4B (such as any one or more of: S102, S102A, S104, S104A, S106, S106A, S106B, S106C, S106D, S106E, S106F, S106G, S106I, S106H, S108, S112, S114, S116, S118). The operations of the electronic device 300 may be embodied in the form of executable logic routines (e.g., lines of code, software programs, etc.) that are stored on a non-transitory computer readable medium (e.g., the memory circuitry 301) and are executed by the processor circuitry 302).

Furthermore, the operations of the electronic device 300 may be considered a method that the electronic device 300 is configured to carry out. Also, while the described functions and operations may be implemented in software, such functionality may as well be carried out via dedicated hardware or firmware, or some combination of hardware, firmware and/or software.

The memory circuitry 301 may be one or more of a buffer, a flash memory, a hard drive, a removable media, a volatile memory, a non-volatile memory, a random access memory (RAM), or other suitable device. In a typical arrangement, the memory circuitry 301 may include a non-volatile memory for long term data storage and a volatile memory that functions as system memory for the processor circuitry 302. The memory circuitry 301 may exchange data with the processor circuitry 302 over a data bus. Control lines and an address bus between the memory circuitry 301 and the processor circuitry 302 also may be present (not shown in Fig. 5). The memory circuitry 301 is considered a non-transitory computer readable medium.

The memory circuitry 301 may be configured to store first load data, second load data, first structural model, second structural model, first version of the software, second version of the software, an update of the first version of the software, an update of the first structural model, a statistical parameter and/or a first criterion in a part of the memory.

It should further be noted that any reference signs do not limit the scope of the claims, that the exemplary embodiments may be implemented at least in part by means of both hardware and software, and that several "means", "units" or "devices" may be represented by the same item of hardware.

The various exemplary methods, devices, nodes, and systems described herein are described in the general context of method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program circuitries may include routines, programs, objects, components, data structures, etc. that perform specified tasks or implement specific abstract data types. Computer-executable instructions, associated data structures, and program circuitries represent examples of program code for executing steps of the methods disclosed herein. The particular sequence of such executable instructions or associated data structures represents examples of corresponding acts for implementing the functions described in such steps or processes.

Although features have been shown and described, it will be understood that they are not intended to limit the claimed disclosure, and it will be made obvious to those skilled in the art that various changes and modifications may be made without departing from the scope of the claimed disclosure. The specification and drawings are, accordingly, to be regarded in an illustrative rather than restrictive sense. The claimed disclosure is intended to cover all alternatives, modifications, and equivalents.

**Claims**

1. A method, performed by an electronic device, for validating a second version of a software or a second structural model for control of a wind turbine, the method comprising:

   obtaining first load data from simulating a load of the wind turbine using a first structural model and a first version of the software;
   obtaining second load data from simulating the load of the wind turbine using the first structural model and the second version of the software or using the first version of the software and a second structural model, wherein the second version of the software is an update of the first version of the software, wherein the second structural model is an update of the first structural model;
   determining, based on the first load data and the second load data, a statistical parameter indicative of a statistical difference between the first load data and the second load data;
   determining whether the statistical parameter meets a first criterion; and
   upon determining that the statistical parameter meets the first criterion, validating the second version of the software or the second structural model for updating the control of the wind turbine.

2. The method according to claim 1, wherein the statistical parameter meets the first criterion when the statistical parameter does not indicate an increase in the load in the second load data compared to the first load data.

3. The method according to any of the previous claims, wherein the statistical parameter does not meet the first criterion when the statistical parameter indicates an increase in the load in the second load data compared to the first load data.

4. The method according to any of the previous claims, the method comprising:

   - upon determining that the statistical parameter does not meet the first criterion, providing to a user that the second version of the software or the second structural model causes a load variation that is not acceptable.

5. The method according to any of the previous claims, wherein determining the statistical parameter comprises:

   - determining a first statistical value based on the first load data;
   - determining a second statistical value based on the second load data; and
   - determining the statistical parameter based on a comparison of the first statistical value and the second statistical value,
   - wherein the statistical parameter does not indicate an increase in the load in the second load data compared to the first load data when the statistical parameter meets a second criterion, and
   - wherein the statistical parameter indicates the increase in the load when the statistical parameter does not meet the second criterion.

6. The method according to any of the previous claims, wherein determining the statistical parameter comprises:

    - determining whether the first load data and the second load data are normally distributed.

7. The method according to claim 6, wherein determining the statistical parameter comprises:

    - upon determining that the first load data and the second load data are not normally distributed, determining the statistical parameter using a non-parametric test on the first load data and the second load data.

8. The method according to claim 7, wherein the non-parametric test comprises one or more of: a Mann-Whitney U-test, a Mann-Whitney-Wilcoxon test, a Wilcoxon test, a Kruskal-Wallis test, and a Chi-squared test.

9. The method according to any of claims 6-8, wherein determining the statistical parameter comprises:

    - upon determining that the first load data and the second load data are normally distributed:

        - determining a first variance associated with the first load data and a second variance associated with the second data; and
        - determining using an F-test whether the first variance and the second variance are equal.

10. The method according to claim 9, wherein determining the statistical parameter comprises:

    - upon determining that the first variance and the second variance are equal, determining the statistical parameter using a student-t-test on the first load data and the second load data;
    - wherein the statistical parameter does not indicate an increase in load in the second load data compared to the first load data when the statistical parameter obtained from the student-t-test applied on the second load data meets a third criterion , and
    - wherein the statistical parameter indicates the increase in load in the second load data compared to the first load data when the statistical parameter does not meet the third criterion.

11. The method according to any of claims 9-10, wherein determining the statistical parameter comprises:

    - upon determining that the first variance and the second variance are not equal, determining the statistical parameter using a Welch-t-test on the first load data and the second load data;
    - wherein the statistical parameter does not indicate an increase in the load in the second load data with respect to the first load data when the statistical parameter obtained from the Welch-t-test applied on the second load data meets a fourth criterion, and
    - wherein the statistical parameter indicates an increase in the load when the statistical parameter does not meet the fourth criterion.

12. The method according to any of the previous claims, wherein obtaining the first load data and the second load data comprises:

    - obtaining the first load data and the second load data from simulating the load for a pre-determined number of simulations.

13. The method according to any of the previous claims, wherein the method comprises uploading the validated second version of the software to a controller of the wind turbine and controlling the wind turbine using the validated second version of the software.

14. The method according to any of the previous claims, wherein the method comprises controlling the wind turbine by updating a structure of the wind turbine to the validated second structural model.

15. An electronic device comprising a memory circuitry, a processor circuitry, and a wireless interface, wherein the electronic device is configured to perform any of the methods according to any of claims 1-14.

16. A wind turbine comprising a controller configured to control the wind turbine using a second version of a software validated according to any claims 1- 13 or a second structural model validated according to any claims 1-12 and 14.

**17.** A computer readable storage medium storing one or more programs, the one or more programs comprising instructions, which when executed by an electronic device cause the electronic device to perform any of the methods of claims 1-14.

**Fig. 1**

## Distribution of loads

Loads

No. of Samples

-●- Present version      -▲- Update

## Fig. 2A

## Distribution of loads

Loads

No. of Samples

-●- Present version      -▲- Update

## Fig. 2B

**Fig. 3**

100

S102 Obtaining first load data from simulating a load of the wind turbine

S102A

S104 Obtaining second load data from simulating the load of the wind turbine

S104A

S106 Determining, based on the first load data and the second load data, a statistical parameter

S106A

S106B

S106C

S106D — No → S106E

Yes ↓

S106F

S106G — No → S106I

Yes ↓

S106H

A

# Fig. 4A

100

A

S108 Determining whether the statistical parameter meets a first criterion

Yes

No

S112 Providing to a user that the second version of the software or the second structural model causes a load variation that is not acceptable

S110 Validating the second version of the software or the second structural model for updating the control of the wind turbine

S114 Uploading the validated second version of the software to a controller of the wind turbine

S116 Controlling the wind turbine using the validated second version of the software

S118 Controlling the wind turbine by updating a structure of the wind turbine to the validated second structural model

**Fig. 4B**

300

303

302

301

**Fig. 5**

Europäisches
Patentamt
European
Patent Office
Office européen
des brevets

# EUROPEAN SEARCH REPORT

**Application Number**

EP 24 20 0198

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 855 439 A (HUANENG TURPAN WIND POWER GENERATION CO LTD) 28 May 2021 (2021-05-28) * abstract * * paragraph [0010] * * paragraph [0036] * * claims 1,5-7 * * figure 5 * | 1-17 | INV. G06F30/13 F03D7/04 G05B17/02 G06F8/65 G06F30/17 G06F30/28 |
| X | PAUL VEERS ET AL: "Extreme load estimation for wind turbines - Issues and opportunities for improved practice", 20TH 2001 ASME WIND ENERGY SYMPOSIUM, 11 January 2001 (2001-01-11), XP055708273, Reston, Virigina DOI: 10.2514/6.2001-44 * abstract * * Chapter "Statistical Modeling" * | 1-17 | ADD. G06F111/04 G06F113/06 G06F113/08 G06F119/14 |
| A | WO 2014/202079 A1 (WIND SOLUTIONS AS KK [DK]) 24 December 2014 (2014-12-24) * abstract * * page 28, paragraph 2 * | 1-17 | |
| A | US 2016/333854 A1 (LUND ARNOLD M [US] ET AL) 17 November 2016 (2016-11-17) * abstract * * paragraph [0053] * | 1-17 | TECHNICAL FIELDS SEARCHED (IPC) G06F G05B F03D F01D G06Q |
| A | US 2020/218232 A1 (TALLMAN JAMES ALBERT [US] ET AL) 9 July 2020 (2020-07-09) * abstract * * paragraphs [0037] - [0039] * * figures 6,7 * | 1-17 | |

-/--

The present search report has been drawn up for all claims

| Place of search | Date of completion of the search | Examiner |
|---|---|---|
| Munich | 24 January 2025 | Sohrt, Wolfgang |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2016/110812 A1 (MUN JOHNATHAN [US]) 21 April 2016 (2016-04-21) * abstract * * paragraph [0256] - paragraph [0257] * * paragraph [0332] * ----- | 1-17 | |
| | | | **TECHNICAL FIELDS SEARCHED (IPC)** |

The present search report has been drawn up for all claims

| Place of search | Date of completion of the search | Examiner |
|---|---|---|
| Munich | 24 January 2025 | Sohrt, Wolfgang |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 20 0198

This annex lists the patent family members relating to the patent documents cited in  the above-mentioned European search report.
The members are as contained in the European Patent Office EDP file on
The European Patent Office is in no way liable for these particulars which are merely given for the purpose of information.

24-01-2025

| Patent document cited in search report | | Publication date | Patent family member(s) | | Publication date |
|---|---|---|---|---|---|
| CN 112855439 | A | 28-05-2021 | NONE | | |
| WO 2014202079 | A1 | 24-12-2014 | NONE | | |
| US 2016333854 | A1 | 17-11-2016 | US 2016333854 A1 | | 17-11-2016 |
| | | | US 2018364651 A1 | | 20-12-2018 |
| | | | WO 2016186694 A1 | | 24-11-2016 |
| US 2020218232 | A1 | 09-07-2020 | NONE | | |
| US 2016110812 | A1 | 21-04-2016 | NONE | | |

EPO FORM P0459

For more details about this annex : see Official Journal of the European Patent Office, No. 12/82